# EUROPÄISCHE PATENTSCHRIFT

(11) **EP 2 534 017 B1**
(45) Veröffentlichungstag und Bekanntmachung des Hinweises auf die Patenterteilung: **14.01.2015**
(21) Anmeldenummer: 11702966.0
(22) Anmeldetag: 01.02.2011
(51) Int. Cl.: B60S 1/38

(54) **WISCHBLATT, INSBESONDERE FÜR SCHEIBEN VON KRAFTFAHRZEUGEN, SOWIE VERFAHREN ZUM HERSTELLEN EINES WISCHBLATTS**
WIPER BLADE, IN PARTICULAR FOR WINDOWS OF MOTOR VEHICLES, AND METHOD FOR PRODUCING A WIPER BLADE
BALAI D'ESSUIE-GLACE, NOTAMMENT POUR LES VITRES DE VÉHICULES AUTOMOBILES, ET PROCÉDÉ DE FABRICATION D'UN BALAI D'ESSUIE-GLACE

(30) Priorität: 12.02.2010 DE 102010001900
(43) Veröffentlichungstag der Anmeldung: 19.12.2012
(73) Patentinhaber: Robert Bosch GmbH, 70442 Stuttgart (DE)
(72) Erfinder: DE BLOCK, Peter, B-3545 Halen (BE); CAMPS, Johan, B-3380 Glabbeek (BE); KIPFMUELLER, Martin, 76131 Karlsruhe (DE); VAN HOYE, Jan, B-3980 Tessenderlo (BE); WEIDLICH, Jochen, 76437 Rastatt (DE)
(86) Internationale Anmeldenummer: PCT/EP2011/051377
(87) Internationale Veröffentlichungsnummer: WO 2011/098372

(56) Entgegenhaltungen:
- EP-A1- 1 745 997
- DE-A1- 19 718 490
- DE-U1- 20 220 355

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird.

Die Erfindung geht aus von einem Wischblatt nach dem Oberbegriff des Anspruchs 1, wie es mit der DE-OS 197 18 490 bekannt geworden ist. Dort wurde vorgeschlagen, dass die Anschlussvorrichtung die Federschiene des Tragelements umfasst und in diesem Bereich die Federschiene mit der Anschlussvorrichtung verschweißt wird.

Nachteilig bei einer solchen Verschweißung ist, dass die Schweißprozessparameter sehr exakt eingehalten werden müssen, um den hohen Biege- und Scherkräften in diesem Bereich über die Lebensdauer des Wischblatts Stand zu halten. Dies verursacht insbesondere bei in Massen hergestellten Wischblättern hohe Zusatzkosten.

### Offenbarung der Erfindung

### Vorteile der Erfindung

Das Wischblatt mit den Merkmalen des Hauptanspruchs hat den Vorteil, dass sich die eingekoppelte Schweißenergie an einer definierten Stelle konzentriert und in definierter Richtung ausbreitet. Damit wird insbesondere die Schweißschmelze vorbestimmbar erzeugt und der Schweißvorgang im zeitlichen Ablauf festgelegt. Es ist damit ausgeschlossen, dass die Schweißschmelze an einem beliebigen Punkt entsteht und je nach Ausbreitungsrichtung im Bereich der Anschlussvorrichtung unterschiedlich lange Zeiten benötigt, um das Ende der Anschlussvorrichtung zu erreichen. Die maximale Schweißzeit ist dadurch deutlich eingegrenzt.

Die Anschlussvorrichtung lässt sich einfach beispielsweise als Spritzgussteil fertigen, wenn die das Tragelement umgreifend den Schenkel mindestens einem Energierichtungsweiser an einer der Unterseite des Tragelements zugewandten Seite aufweist.

Das Einkuppeln der Schweißenergie gelingt besonders einfach, wenn der Energierichtungsweiser klein ist im Verhältnis zur Schweißfläche, insbesondere wenn er punktförmig ausgestaltet ist. Ein linienförmig nur Energierichtungsweiser kann dann vorteilhaft sein, wenn sich die Schenkel über eine längere Strecke entlang des Tragelements erstrecken.

Es ist besonders vorteilhaft, mehrere Energierichtungsweiser anzuordnen, da dadurch die maximale Schweißzeit, die benötigt wird, um die Schweißschmelze über die notwendige Fläche zu verteilen, weiter reduziert werden kann. In diesem Fall ist es sinnvoll, die eingekoppelte Schweißenergie entsprechend höher zu wählen, als im Falle eines einzelnen Energierichtungsweisers.

Der Energierichtungsweiser weist bevorzugt eine konvexe, insbesondere spitzige Form auf, so dass die punktgenaue Einleitung der Schweißenergie gelingt. Außerdem kann eine im Spritzgussverfahren hergestellte Anschlussvorrichtung sehr einfach entformt werden.

Es hat sich als besonders günstig erwiesen, Energierichtungsweiser im Bereich der Schenkel mit einer Grundfläche von ungefähr einem Quadratmillimeter bereitzustellen. Ferner hat es sich als besonders günstig erwiesen, wenn der Abstand zwischen einzelnen Energierichtungsweiser ungefähr dem dreifachen der Größe der Grundfläche entspricht.

Insbesondere wenn die Anschlussvorrichtung aus Kunststoff und die Federschienen des Tragelements aus Metall gefertigt sind kann bevorzugt die Schweißenergie mittels Ultraschallschweißens eingebracht werden.

Hohe Stabilität kann erreicht werden, wenn die Schweißenergie von der Oberseite des Tragelements eingebracht wird. Es hat sich als vorteilhaft erwiesen, wenn die Anschlussvorrichtung im Bereich der Oberseite des Tragelements mindestens einen Durchbruch aufweist, durch die in die Schweißenergie einbringbar ist. Die Stabilität kann weiter erhöht werden, wenn mindestens einem Energierichtungsweiser dem Durchbruch gegenüberliegt.

Die Montage des noch nicht geschweiften Wischblatts wird vereinfacht, wenn der Schenkel beziehungsweise die Schenkel die Schiene des Tragelements mit Spiel umgreifen. Der Schenkel kann mit einer Quetschnaht ausgebildet sein, die die Form einer Erhöhung in Richtung auf die Federschiene aufweist und die auch als Energierichtungsweiser verwendet werden kann.

Wird eine Schmelzflussrinne vorgesehen, kann die Prozesssicherheit verbessert werden, wenn der Fluss der Schweißschmelze gelenkt bzw. gestoppt werden kann. Die Schmelzflussrinne verläuft bevorzugt entlang einer Längserstreckung der Schiene.

Die Montage kann weiter vereinfacht werden, wenn die Anschlussvorrichtung im Bereich des mindestens einen Schenkels eine Einführschräge zum erleichterten Einführen der mindestens einen Schiene aufweist.

Es hat sich gezeigt, dass sich die Schweißenergie besonders prozesssicher einkoppeln lässt, wenn die Höhe der Energierichtungsweiser 30% bis 80% der Dicke der Federschiene entspricht. Besonders vorteilhaft ist es, wenn bei einer Federschiene zwischen 0,8 mm und einem Millimeter der oder die Energierichtungsweiser ungefähr 0,5 mm Höhe aufweisen.

Ein kostengünstiges Wischblatt ergibt sich, wenn die Anschlussvorrichtung zumindest teilweise aus einem Kunststoff, insbesondere einem thermoplastischen Kunststoff besteht. Die Verschweißung der Anschlussvorrichtung mit dem Tragelement gelingt dein besonders gut, wenn die Federschienen mit einem Kunststoff, insbesondere einem thermoplastischen Kunststoff umwandelt sind.

Die Erfindung betrifft auch ein Verfahren zum Herstellen eines Wischblatts, das durch die folgenden Schritte gekennzeichnet ist. Zuerst erfolgt ein Einschieben einer oder mehrerer Federschienen in eine Anschlussvorrichtung, die einen oder mehrere Energierichtungsweiser für die Schweißenergie ein mindestens einem Schenkel aufweist. Dann wird die Schweißenergie derart eingebracht, dass der Energie Fluss sich vom Energierichtungsweiser ausgehend ausbreitet, und die Schweißung kontrolliert und vorbestimmt abläuft.

### Zeichnungen

In den Zeichnungen sind mehrere Ausführungsbeispiele des erfindungsgemäßen Wischblatts dargestellt und in der nachfolgenden Beschreibung näher erläutert. Es zeigen:
- Fig. 1: ein Wischblatt in Schrägansicht,
- Fig. 2: ein Schnitt nach Linie II-II in Fig. 1,
- Fig. 3: einen Teilschnitt nach Linie III in Fig. 2,
- Fig. 4 a-c und 5: Ausführungsbeispiele für Energierichtungsweiser,
- Fig. 6 und 7: teilweise einen Schenkel der Anschlussvorrichtung,
- Fig. 8: eine Anschlussvorrichtung in einer Ultraschallschweißvorrichtung und
- Fig. 9: eine Variante der Fig. 8.

### Beschreibung der Ausführungsbeispiele

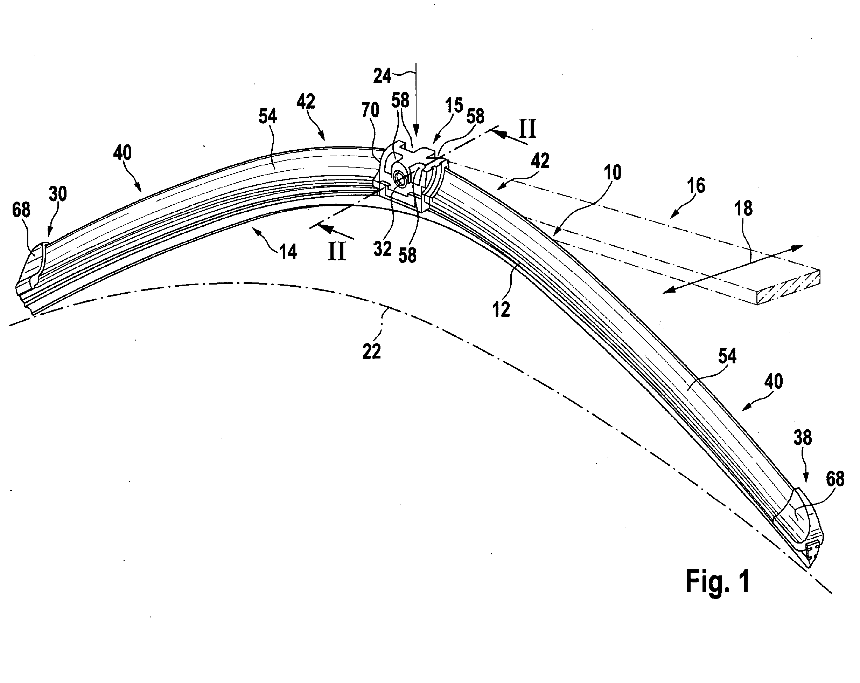

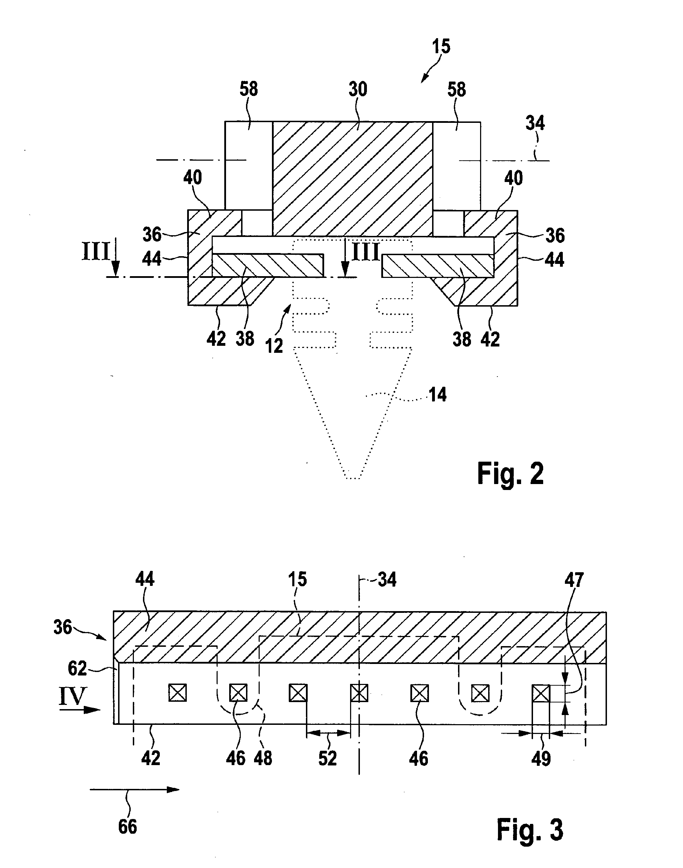

Ein in Figur 1 gezeigtes Wischblatt 10 weist ein bandartig langgestrecktes, federelastisches Tragelement 12 auf (Figuren 1 und 2), an dessen unteren, der Scheibe zugewandten, konkaven Bandseite 13 eine langgestreckte, gummielastische Wischleiste 14 längsachsenparallel befestigt ist. An der oberen, von der Scheibe abgewandten, konvexen Bandseite 11 des auch als Federschiene zu bezeichnenden Tragelements 12 ist in dessen Mittelabschnitt eine wischblattseitige Anschlussvorrichtung 15 angeordnet, mit deren Hilfe das Wischblatt 10 gelenkig mit einem in Figur 1 strichpunktiert angedeuteten Wischerarm 16 lösbar verbunden werden kann. Der in Richtung eines Doppelpfeils 18 in Figur 1 pendelnd angetriebenen Wischerarm 16 ist in Richtung eines Pfeils 24 zur zu wischenden Scheibe - beispielsweise zur Windschutzscheibe eines Kraftfahrzeugs belastet - deren Oberfläche in Figur 1 durch eine strichpunktierte Linie 22 angedeutet ist. Da die Linie 22 die stärkste Krümmung der Scheibenoberfläche darstellen soll ist klar ersichtlich, dass die Krümmung des mit seinen beiden Enden an der Scheibe anliegenden, noch unbelasteten Wischblatts stärker ist als die maximale Scheibenkrümmung (Figur 1). Unter dem Anpressdruck (Pfeil 24) legt sich das Wischblatt 10 mit seiner Wischlippe 26 über seine gesamte Länge an der Scheibenoberfläche 22 an. Dabei baut sich im aus Metall gefertigten, federelastischen Tragelement 12 eine Spannung auf, welche für eine ordnungsgemäße Anlage der Wischleiste 14 beziehungsweise der Wischlippe 26 über deren gesamte Länge an der Scheibenoberfläche 22 sowie für eine gleichmäßige Verteilung des Anpressdrucks (Pfeil 24) sorgt.

Im Folgenden soll nun auf die besondere Ausgestaltung des erfindungsgemäßen Wischblatts näher eingegangen werden. In Fig. 2 ist die Anschlussvorrichtung 15 im Schnitt gezeigt. Sie besitzt einen Grundkörper 30, der eine Bolzenaufnahme 32 (Figur 1) aufweist, die in Fig. 2 durch ihre Achse 34 dargestellt ist. Am Grundkörper 30 sind zwei sich gegenüberliegenden Schenkel 36 mit im Querschnitt U-förmiger Gestalt angeformt, dessen U-Öffnungen zueinander weisen. Dadurch entsteht ein Hohlraum, in dem zwei Federschienen 38 des Tragelements 12 gelagert sind, die ihrerseits zwischen sich die Wischleiste 14 aufnehmen.

Die Schenkel 36 sind im Ausführungsbeispiel leistenförmig und erstrecken sich über die gesamte Länge der Anschlussvorrichtung 15 sie weisen mit dem Grundkörper 30 verbundene obere Leisten 40, dem Grundkörper 30 gegenüberliegende und leichten 42 sowie die obere Leisten 40 mit den unteren Leisten 42 verbindende Stege 44 auf. In alternativen Formen können die Schenkel 36 jedoch auch kragenartig ausgebildet sein und sich nur partiell entlang der Anschlussvorrichtung erstrecken.

In Fig. 3 ist teilweise ein Schenkel 36 in Richtung der Linie nach III in Fig. 2 dargestellt, wobei die Verschweißung zwischen Anschlussvorrichtung 15 und Tragelement 12 noch nicht stattgefunden hat und deshalb Energierichtungsweiser 46 erkennbar sind. Die Energierichtungsweiser 46 sind an der unteren Leiste 42 so angeordnet, dass sie in Richtung der ihnen gegenüberliegenden Federschiene 38 weisen. Im Ausführungsbeispiel sind sieben Energierichtungsweiser 46 gleichmäßig über die Länge der unteren Leiste 42 angeordnet. Es ist jedoch auch denkbar, nur einen einzelnen Energierichtungsweiser 46 vorzusehen, der dann am besten mit sich die platziert wird.

Wie in Fig. 3 zu erkennen ist, sind sowohl der einzelne Energierichtungsweiser 46 als auch die Summe aber Energierichtungsweiser 46 in ihrer Fläche klein gegenüber der Fläche der unteren Leiste 42. Dies gilt auch für den Überlappungsbereich zwischen der unteren Leiste 42 und der ihr gegenüberliegenden Federschiene 38.

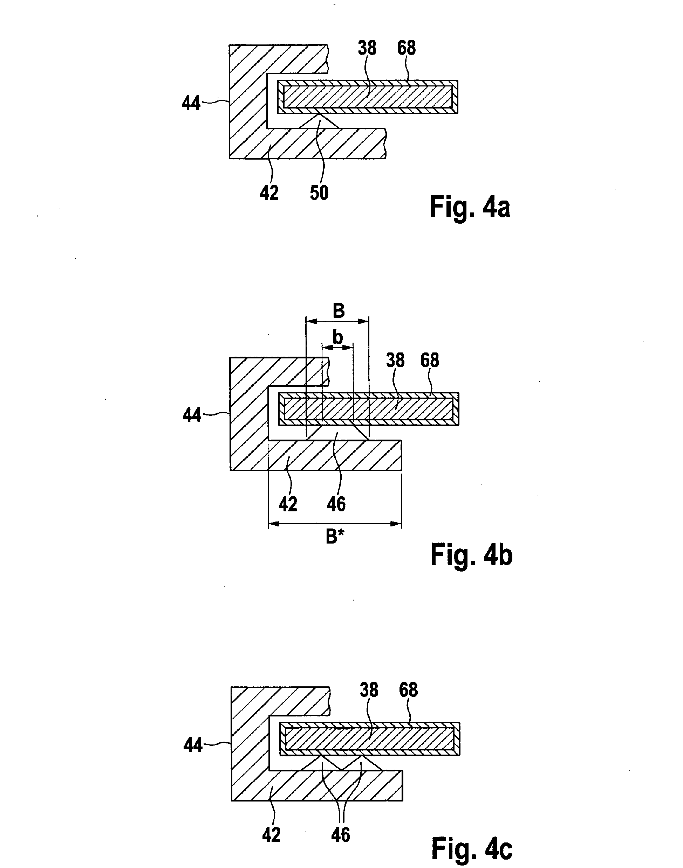

Der Energierichtungsweiser 46 ist ungefähr quadratisch in seiner Grundfläche 48 und besitzt eine pyramidenförmige Erhebung 50, wie sie auch in Fig. 4a zu sehen ist. Jede Seitenlänge der Grundfläche beträgt ungefähr 1 mm, die Höhe der Pyramide ungefähr 0,5 mm. In Fig. 4b ist eine pyramidenstumpfförmige Ausführung gezeigt, bei der die Breite b der kleinen Fläche klein ist gegen die Breite B der Grundfläche, welche wiederum klein ist relativ zur Breite B* der Leiste 42. In Fig. 4c ist dargestellt, dass die Energierichtungsgeber 42 auch paarweise nebeneinander angeordnet sein können. Im Extremfall wird eine Vielzahl von Energierichtungsweiser angeordnet, die zu einer Strukturierung der Oberfläche führen.

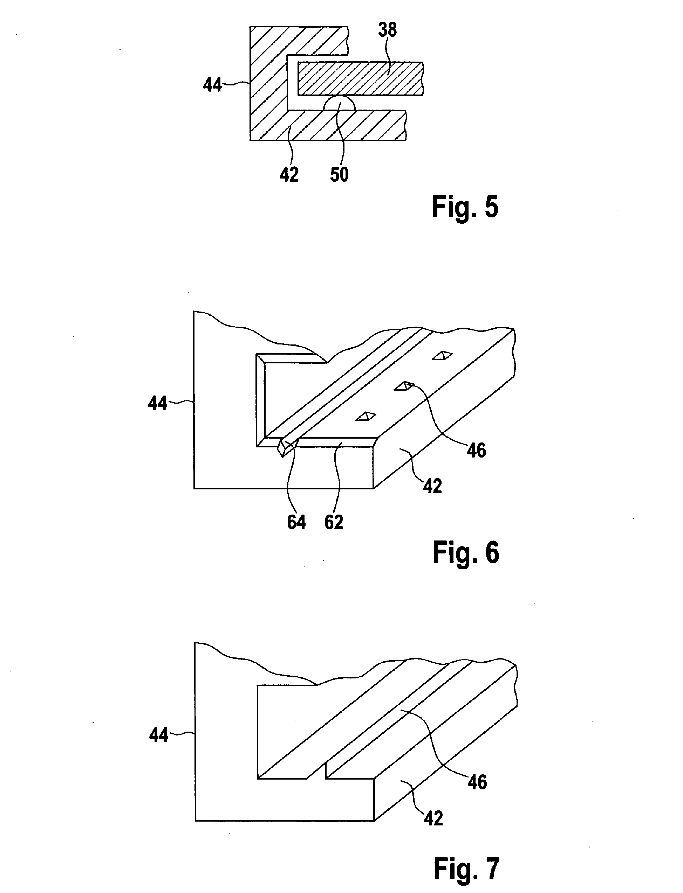

Wie in Fig. 5 zu sehen ist, kann die Erhebung 50 auch konvex, insbesondere halbkreisförmig geformt sein. Der erste Kontakt zwischen dem Energierichtungsweiser 46 und der Federschienen 38 kann somit als punktförmige Berührung angesehen werden oder zumindest eine Berührung mit einer kleine Fläche.

Der Abstand 52 zwischen zwei Energierichtungsweiser 46 ist ungefähr dreimal so groß wie die Seitenlängen 47, 49 der Grundfläche 48 und liegt im Ausführungsbeispiel deshalb bei ungefähr 3 mm. Größe und Abstand der Energierichtungsweiser 46 richten sich nach der einzukoppelnden Schweißenergie, die ihrerseits umso höher zu wählen ist, je kürzer die zur Verfügung stehende Schweißzeit gewählt wird.

Im Extremfall kann der Energierichtungsweiser 46 linienförmig ausgebildet sein, wie dies in Fig. 7 dargestellt ist. Dort ist auch zu erkennen, dass im Querschnitt gesehen der Energierichtungsweiser 46 dreieckförmig ausgebildet sein kann. Je nach den weiteren geometrischen Verhältnissen innerhalb der U-Form der Schenkel 36 und der Dicke der Federschienen 38 kann der Energierichtungsweiser 46 und insbesondere der linienförmige Energierichtungsweiser 46 als Quetschnaht fungieren, das heißt, die Federschienen 38 sind nach deren Einführen in die Schenkel 36 durch die Quetschnaht in einer leichten Presspassung in den Schenkeln 38 gehalten. Auch der linienförmige Energierichtungsgeber 46 kann pyramidenstumpfförmig ausgebildet sein. Und auch hier können die Energierichtungsgeber paarweise auftreten.

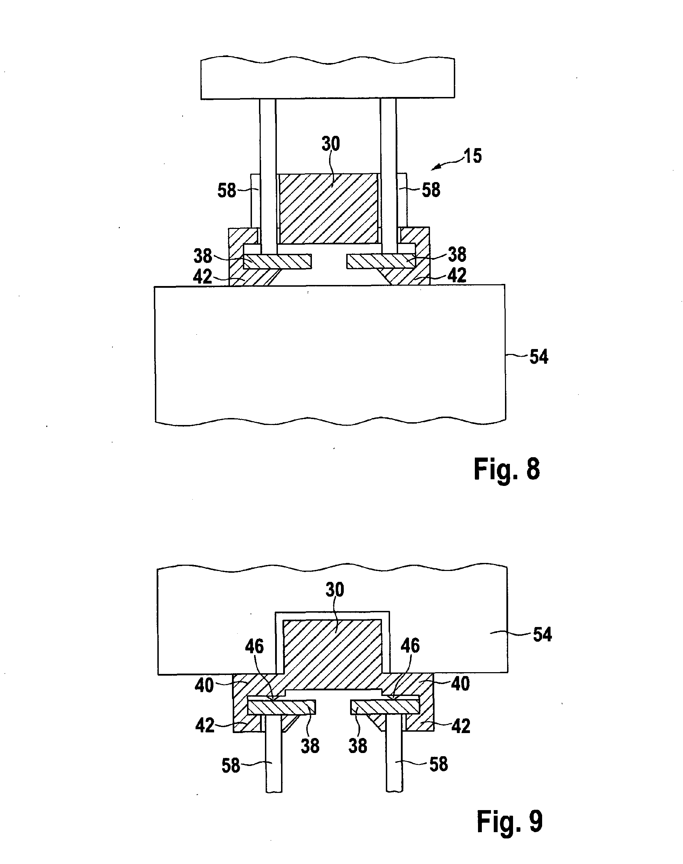

In Fig. 8 ist dargestellt, wie die Verbindung zwischen der Anschlussvorrichtung 15 und dem Federschienen 38 hergestellt wird. Dabei liegt die Anschlussvorrichtung 15 mit ihren beiden unteren Leisten 42 auf einem Amboss 54 auf während die Schweißenergie in Form von Ultraschall von oben ein gekoppelt wird. Dazu weist der Grundkörper 30 sowie die oberen Leisten 40 Aussparungen 58 auf, durch die Sonotroden 60 bis auf die oberen Seiten der Federschienen 38 reichen und ihre Ultraschallenergie in die Federschienen einkoppeln. Die Ultraschallwellen durchlaufen die in der Regel in Metall gehaltenen Federschienen 38 und gelangen auf deren Unterseite auf die Spitzen der Energierichtungsweiser 46. Von dort ausgehend wird die Spot-artig erzeugte Hitze in die untere Leiste 42 eingeleitet und verteilt.

Es hat sich herausgestellt, dass es besonders günstig ist, wenn mindestens ein Energierichtungsweiser 46 direkt unter jeder Aussparung 48 und damit direkt unter der Sonotrode 60 liegt. Ausgehend von diesen exponierten Energierichtungsweiser 46 ergibt sich eine Kaskaden-förmige Ausbreitung des Schmelzflusses entlang den weiteren Energierichtungsweiser 46 auf der unteren Leiste 42.

Um den Schmelzflusses noch besser zu leiten kann eine Schmelzflussrinne 64 vorgesehen sein, wie dies in einer Variante in Fig. 6 dargestellt ist. Diese Schmelzflussrinne 64 verhindert ein übermäßiges abfließen des Schmelzflusses in Richtung der Stege 44 und verbessert den Fluss entlang der unteren Leiste 42. In der Regel genügt es, die Tiefe der Schmelzflussrinne 64 entsprechend der Höhe Energierichtungsweiser 46 vorzusehen.

Die Höhe der Energierichtungsweiser 46 sollte sich in einem Bereich zwischen 30% in 80% der Dicke dazu Verschweißen den Federschiene 38 bewegen und wird bei Schienen bieten von 0,8 mm bis 1 mm bevorzugt mit 0,5 mm zu wählen sein.

In der Regel umgreifen die Schenkel 36 die Federschienen 38 des Tragelements 12 mit Spiel, so dass die Federschienen 38 problemlos in die Schenkel 36 einführbar sind. Wird jedoch, wie weiter oben beschrieben ist, eine Quetschnaht eingesetzt, ist das Einführen erschwert. Erleichterung bringt eine Einführschräge 62 im Bereich der Schenkel 36. Die Fügerichtung der Federschienen 38 in die Schenkel 36 ist dann entlang des Pfeiles 66.

Im Ausführungsbeispiel ist die Anschlussvorrichtung 15 aus einem thermoplastischen Kunststoff gefertigt und bevorzugt als Spritzgussteil hergestellt. Die Federschienen 38 bestehen in der Regel aus Stahl und können, wie in Fig. 4 angedeutet ist, eine Ummantelung 68 aufweisen. Diese Ummantelung 68 dient dem Schutz der Federschiene 38 sowie dem besseren Schweißverhalten zwischen Federschiene 38 und untere Leiste 42. die Ummantelung 68 kann ebenfalls aus einem thermoplastischen Kunststoff bestehen.

Bei dem erfindungsgemäßen Verfahren zum Herstellen eines Wischblatts 10 werden zuerst die Federschienen 38 in die Schenkel 36 der Anschlussvorrichtung 15 eingeschoben und in der zu verschweißenden Lage auf einem Amboss 54 einer Ultraschallschweißanlage fixiert. Dann werden vier Sonotroden 60 in die vier Aussparungen 58 eingefahren bis sie auf der Oberseite der Federschienen 38 aufliegen. Unter Druck der Sonotroden 60 auf die Federschienen 38 wird die Ultraschallenergie in die Federschiene 38 ein gekoppelt. Die Schallwellen durchlaufen die Federschiene 38, treffen auf die Spitzen der Energierichtungsweiser 46 und beginnen diese aufzuschmelzen. Von dort ausgehend erwärmt sich der Kunststoff der unteren Leisten 42 und bildet eine Schmelze aus. Der Schmelzfluss erstreckt sich ausgehend von den Energierichtungsweiser 46 und gefördert durch den beauftragten Druck gleichmäßig über die der Federschiene 38 zugewandten Oberfläche der unteren Leiste 42 und kann mit Hilfe einer Schmelzflussrinne 64 gebündelt werden.

Die Zuführung der Ultraschallenergie wird gestoppt und sobald das Aushärten des Schmelzflusses beginnt wird der Druck der Sonotroden 60 auf die Federschienen 38 verringert und die Sonotroden 60 aus den Aussparungen 58 herausgefahren. Die Federschienen 38 und damit das Tragelement 12 sind mit Anschlussvorrichtung 15 fest verbunden und es können weitere Elemente wie die Wischleiste 14 und gegebenenfalls Spoiler und Endkappen ergänzt werden.

Es ist auch denkbar, die Energie nicht durch Ultraschall sondern mittels Laser einzukoppeln, wobei Transmissions- und Absorptionskoeffizienten der Anschlussvorrichtung 15 bzw. der Federschienen 38 oder deren Umwandlungen 68 so auf die Laser-Wellenlänge abgestimmt sind, dass die erste Wärmeerzeugung im Bereich der Energierichtungsweiser 46 erfolgt.

## Patentansprüche

1. Wischblatt, insbesondere für Scheiben von Kraftfahrzeugen, mit einem Tragelement (12), das eine elastische Wischleiste (14) trägt und mindestens eine federelastische Federschiene (38) aufweist, mit einer Anschlussvorrichtung (15), die direkt oder über einen Adapter mit einem Wischerarm (16) in Verbindung treten kann und die mit der mindestens einen Federschiene (38) des Tragelements (12) verschweißt ist, **dadurch gekennzeichnet, dass** die Anschlussvorrichtung (15) an die mindestens eine Federschiene (38) umfassenden Schenkel (36) mindestens einen Energierichtungsweiser (46) aufweist, der die Schweißenergie an einer definierten Stelle zwischen Federschiene (38) und Anschlussstück (15) zur Entfaltung bringt.

2. Wischblatt nach Anspruch 1, **dadurch gekennzeichnet, dass** das Tragelement (12) eine konvexe Oberseite und eine konkave Unterseite aufweist und dass jeder Schenkel (36) mindestens einen Energierichtungsweiser (46) an einer der Unterseite des Tragelements (12) zugewandten Seite aufweist.

3. Wischblatt nach einem der vorhergehenden Ansprüche, **dadurch gekennzeichnet, dass** der Energierichtungsweiser (46) klein ist im Verhältnis zur Schweißfläche.

4. Wischblatt nach einem der vorhergehenden Ansprüche, **dadurch gekennzeichnet, dass** der Energierichtungsweiser (46) punktförmig ist.

5. Wischblatt nach einem der Ansprüche 1 bis 3, **dadurch gekennzeichnet, dass** der Energierichtungsweiser (46) pyramidenstumpfförmig ist.

6. Wischblatt nach einem der Ansprüche 1 bis 3, **dadurch gekennzeichnet, dass** der Energierichtungsweiser (46) linienförmig ist.

7. Wischblatt nach einem der vorhergehenden Ansprüche, **dadurch gekennzeichnet, dass** mehrere Energierichtungsweiser (46) angeordnet sind.

8. Wischblatt nach einem der vorhergehenden Ansprüche, **dadurch gekennzeichnet, dass** der Energierichtungsweiser (46) eine konvexe, insbesondere spitzige Form aufweist.

9. Wischblatt nach einem der vorhergehenden Ansprüche, **dadurch gekennzeichnet, dass** der Energierichtungsweiser (46) am Schenkel (36) eine Grundfläche (48) von ungefähr einem Quadratmillimeter aufweist.

10. Wischblatt nach einem der vorhergehenden Ansprüche, **dadurch gekennzeichnet, dass** der Abstand (52) zwischen einzelnen Energierichtungsweiser (46) im Wesentlichen das dreifache der Größe der Grundfläche (48) eines Energierichtungsweiser (46) aufweist.

11. Wischblatt nach einem der vorhergehenden Ansprüche, **dadurch gekennzeichnet, dass** die Schweißenergie mittels Ultraschallschweißens eingebracht ist.

12. Wischblatt nach einem der vorhergehenden Ansprüche, **dadurch gekennzeichnet, dass** die Schweißenergie von der Oberseite des Tragelements (12) eingebracht ist.

13. Wischblatt nach einem der vorhergehenden Ansprüche, **dadurch gekennzeichnet, dass** die Anschlussvorrichtung (15) im Bereich der Oberseite des Tragelements (12) mindestens eine Aussparung (58) aufweist, durch den die Schweißenergie einbringbar ist.

14. Wischblatt nach Anspruch 13, **dadurch gekennzeichnet, dass** mindestens ein Energierichtungsweiser (46) der Aussparung (58) gegenüberliegt.

15. Wischblatt nach einem der vorhergehenden Ansprüche, **dadurch gekennzeichnet, dass** der Schenkel (36) die Federschiene (38) des Tragelements (12) mit Spiel umgreift.

16. Wischblatt nach einem der vorhergehenden Ansprüche, **dadurch gekennzeichnet**, das am Schenkel (46) mindestens eine Quetschnaht in Form einer Erhöhung in Richtung auf die Federschiene (38) vorgesehen ist, die auch als Energierichtungsweiser (46) verwendet werden kann.

17. Wischblatt nach einem der vorhergehenden Ansprüche, **dadurch gekennzeichnet**, das mindestens eine Schmelzflussrinne (64) zum Leiten und/oder Halten der Schweißschmelze vorgesehen ist.

18. Wischblatt nach Anspruch 17, **dadurch gekennzeichnet, dass** die Schmelzflussrinne (64) entlang einer Längserstreckung der Federschiene (38) verläuft.

19. Wischblatt nach einem der vorhergehenden Ansprüche, **dadurch gekennzeichnet, dass** die Anschlussvorrichtung (15) im Bereich des mindestens einen Schenkel (36) eine Einführschräge (62) zum erleichterten Einführen der mindestens einen Federschiene (38) aufweist.

20. Wischblatt nach einem der vorhergehenden Ansprüche, **dadurch gekennzeichnet, dass** die Höhe der Energierichtungsweiser (46) 30% bis 80% der Dicke der Federschiene (38) entspricht.

21. Wischblatt nach einem der vorhergehenden Ansprüche, **dadurch gekennzeichnet, dass** das Anschlussstück (15) zumindest teilweise aus einem Kunststoff, insbesondere einem thermoplastischen Kunststoff besteht.

22. Wischblatt nach einem der vorhergehenden Ansprüche, **dadurch gekennzeichnet, dass** die Federschiene (38) mit einem Kunststoff, insbesondere einem thermoplastischen Kunststoff ummantelt sind.

23. Verfahren zum Herstellen eines Wischblatts nach einem der vorhergehenden Ansprüche, **gekennzeichnet durch** die Schritte:
- Einschieben einer oder mehrerer Federschienen (38) in eine Anschlussvorrichtung (15)
- Einbringen von Schweißenergie in die eine oder mehrere Federschienen (38) **durch** mindestens eine Aussparung (58) in der Anschlussvorrichtung (15), so dass **durch** mindestens einen Energierichtungsweiser (46) die Schweißenergie mindestens einen Schenkel (36) der Anschlussvorrichtung (15) mit der Unterseite des Tragelements (12) vorbestimmt verschweißt.

## Claims

1. Wiper blade, in particular for windows of motor vehicles, with a supporting element (12) which supports an elastic wiper strip (14) and has at least one spring-elastic spring rail (38), with a connecting device (15) which can enter into connection with a wiper arm (16) directly or via an adapter and which is welded to the at least one spring rail (38) of the supporting element (12), **characterized in that** the connecting device (15) has at least one energy director (46) on the limb (36) encompassing at least one spring rail (38), said energy director directing the welding energy to a defined point between the spring rail (38) and connecting piece (15).

2. Wiper blade according to Claim 1, **characterized in that** the supporting element (12) has a convex upper side and a concave lower side, and **in that** each limb (36) has at least one energy director (46) on a side facing the lower side of the supporting element (12).

3. Wiper blade according to either of the preceding claims, **characterized in that** the energy director (46) is small in relation to the welding surface.

4. Wiper blade according to one of the preceding claims, **characterized in that** the energy director (46) is point-shaped.

5. Wiper blade according to one of Claims 1 to 3, **characterized in that** the energy director (46) is in the shape of a truncated pyramid.

6. Wiper blade according to one of Claims 1 to 3, **characterized in that** the energy director (46) is line-shaped.

7. Wiper blade according to one of the preceding claims, **characterized in that** there is a plurality of energy directors (46).

8. Wiper blade according to one of the preceding claims, **characterized in that** the energy director (46) has a convex, in particular sharp-pointed shape.

9. Wiper blade according to one of the preceding claims, **characterized in that** the energy director (46) on the limb (36) has an area (48) of approximately one square millimeter.

10. Wiper blade according to one of the preceding claims, **characterized in that** the distance (52) between individual energy directors (46) is essentially three times the size of the area (48) of one energy director (46).

11. Wiper blade according to one of the preceding claims, **characterized in that** the welding energy is introduced by means of ultrasonic welding.

12. Wiper blade according to one of the preceding claims, **characterized in that** the welding energy is introduced from the upper side of the supporting element (12).

13. Wiper blade according to one of the preceding claims, **characterized in that** the connecting device (15) has, in the region of the upper side of the supporting element (12), at least one cutout (58) through which the welding energy is introducible.

14. Wiper blade according to Claim 13, **characterized in that** at least one energy director (46) lies opposite the cutout (58).

15. Wiper blade according to one of the preceding claims, **characterized in that** the limb (36) engages around the spring rail (38) of the supporting element (12) with play.

16. Wiper blade according to one of the preceding claims, **characterized in that** at least one mash seam in the form of an elevation in the direction of the spring rail (38) is provided on the limb (36), which mash seam may also be used as the energy director (46).

17. Wiper blade according to one of the preceding claims, **characterized in that** at least one melt flow channel (64) is provided for conducting and/or retaining the welding melt.

18. Wiper blade according to Claim 17, **characterized in that** the melt flow channel (64) runs along a longitudinal extent of the spring rail (38).

19. Wiper blade according to one of the preceding claims, **characterized in that** the connecting device (15) has, in the region of the at least one limb (36), an insertion slope (62) for easier insertion of the at least one spring rail (38).

20. Wiper blade according to one of the preceding claims, **characterized in that** the height of the energy directors (46) corresponds to 30% to 80% of the thickness of the spring rail (38).

21. Wiper blade according to one of the preceding claims, **characterized in that** the connecting piece (15) is at least partially composed of a plastic, in particular a thermoplastic.

22. Wiper blade according to one of the preceding claims, **characterized in that** the spring rails (38) are encased with a plastic, in particular a thermoplastic.

23. Method for producing a wiper blade according to one of the preceding claims, **characterized by** the following steps:
- pushing one or more spring rails (38) into a connecting device (15),
- introducing welding energy into the one or more spring rails (38) through at least one cutout (58) in the connecting device (15) such that, by means of at least one energy director (46), the welding energy welds at least one limb (36) of the connecting device (15) to the lower side of the supporting element (12) in a predetermined manner.

## Revendications

1. Balai d'essuie-glace, en particulier pour des vitres de véhicules automobiles, comprenant un élément de support (12) qui porte une raclette élastique de balai'd'essuie-glace (14) et au moins une lame-ressort élastique (38), comprenant un dispositif de raccordement (15) qui peut entrer en liaison, directement ou par le biais d'un adaptateur, avec un bras d'essuie-glace (16) et qui est soudé sur l'au moins une lame-ressort (38) de l'élément de support (12), **caractérisé en ce que** le dispositif de raccordement (15) comprend au moins un élément directeur d'énergie (46) sur les branches (36) entourant au moins une lame-ressort (38), lequel dirige l'énergie de soudage en un point défini entre la lame-ressort (38) et la pièce de raccordement (15).

2. Balai d'essuie-glace selon la revendication 1, **caractérisé en ce que** l'élément de support (12) présente un côté supérieur convexe et un côté inférieur concave, et **en ce que** chaque branche (36) comprend au moins un élément directeur d'énergie (46) sur un côté tourné vers le côté inférieur de l'élément de support (12).

3. Balai d'essuie-glace selon l'une quelconque des revendications précédentes, **caractérisé en ce que** l'élément directeur d'énergie (46) est petit par rapport à la surface de soudage.

4. Balai d'essuie-glace selon l'une quelconque des revendications précédentes, **caractérisé en ce que** l'élément directeur d'énergie (46) est en forme de point.

5. Balai d'essuie-glace selon l'une quelconque des revendications 1 à 3, **caractérisé en ce que** l'élément directeur d'énergie (46) est en forme de pyramide tronquée.

6. Balai d'essuie-glace selon l'une quelconque des revendications 1 à 3, **caractérisé en ce que** l'élément directeur d'énergie (46) est en forme de ligne.

7. Balai d'essuie-glace selon l'une quelconque des revendications précédentes, **caractérisé en ce que** plusieurs éléments directeurs d'énergie (46) sont prévus.

8. Balai d'essuie-glace selon l'une quelconque des revendications précédentes, **caractérisé en ce que** l'élément directeur d'énergie (46) présente une forme convexe, en particulier pointue.

9. Balai d'essuie-glace selon l'une quelconque des revendications précédentes, **caractérisé en ce que** l'élément directeur d'énergie (46) sur la branche (36) présente une surface de base (48) d'approximativement un millimètre carré.

10. Balai d'essuie-glace selon l'une quelconque des revendications précédentes, **caractérisé en ce que** la distance (52) entre des éléments directeurs d'énergie individuels (46) est essentiellement le triple de la taille de la surface de base (48) d'un élément directeur d'énergie (46).

11. Balai d'essuie-glace selon l'une quelconque des revendications précédentes, **caractérisé en ce que** l'énergie de soudage est introduite au moyen d'un soudage par ultrasons.

12. Balai d'essuie-glace selon l'une quelconque des revendications précédentes, **caractérisé en ce que** l'énergie de soudage est introduite à partir du côté supérieur de l'élément de support (12).

13. Balai d'essuie-glace selon l'une quelconque des revendications précédentes, **caractérisé en ce que** le dispositif de raccordement (15) comprend au moins un évidement (58) dans la région du côté supérieur de l'élément de support (12), à travers lequel évidement l'énergie de soudage peut être introduite.

14. Balai d'essuie-glace selon la revendication 13, **caractérisé en ce qu'**au moins un élément directeur d'énergie (46) est en regard de l'évidement (58).

15. Balai d'essuie-glace selon l'une quelconque des revendications précédentes, **caractérisé en ce que** la branche (36) vient en prise avec jeu autour de la lame-ressort (38) de l'élément de support (12).

16. Balai d'essuie-glace selon l'une quelconque des revendications précédentes, **caractérisé en ce qu'**au moins un joint de soudage par écrasement sous forme d'une bosse en direction de la lame-ressort (38) est prévu sur la branche (36), lequel peut également être utilisé en tant qu'élément directeur d'énergie (46).

17. Balai d'essuie-glace selon l'une quelconque des revendications précédentes, **caractérisé en ce qu'**au moins un canal de flux de masse fondue (64) est prévu pour guider et/ou retenir la masse fondue de soudure.

18. Balai d'essuie-glace selon la revendication 17, **caractérisé en ce que** le canal de flux de masse fondue (64) s'étend le long d'une étendue longitudinale de la lame-ressort (38).

19. Balai d'essuie-glace selon l'une quelconque des revendications précédentes, **caractérisé en ce que** le dispositif de raccordement (15) comprend, dans la région de l'au moins une branche (36), un chanfrein d'insertion (62) pour faciliter l'insertion de l'au moins une lame-ressort (38).

20. Balai d'essuie-glace selon l'une quelconque des revendications précédentes, **caractérisé en ce que** la hauteur des éléments directeurs d'énergie (46) correspond à 30 % à 80 % de l'épaisseur de la lame-ressort (38).

21. Balai d'essuie-glace selon l'une quelconque des revendications précédentes, **caractérisé en ce que** la pièce de raccordement (15) est constituée au moins partiellement d'un plastique, en particulier d'un plastique thermoplastique.

22. Balai d'essuie-glace selon l'une quelconque des revendications précédentes, **caractérisé en ce que** les lames-ressort (38) sont enrobées d'un plastique, en particulier d'un plastique thermoplastique.

23. Procédé de fabrication d'un balai d'essuie-glace selon l'une quelconque des revendications précédentes, **caractérisé par** les étapes suivantes
- insertion d'une ou de plusieurs lames-ressort (38) dans un dispositif de raccordement (15),
- introduction d'une énergie de soudage dans la ou les plusieurs lames-ressort (38) à travers au moins un évidement (58) dans le dispositif de raccordement (15), de telle sorte qu'au moyen d'au moins un élément directeur d'énergie (46), l'énergie de soudage soude de manière prédéfinie au moins une branche (36) du dispositif de raccordement (15) sur le côté inférieur de l'élément de support (12).
